# EUROPÄISCHE PATENTSCHRIFT

(11) **EP 0 824 671 B1**
(45) Veröffentlichungstag und Bekanntmachung des Hinweises auf die Patenterteilung: **16.09.1998**
(21) Anmeldenummer: 96919716.9
(22) Anmeldetag: 08.05.1996
(51) Int. Cl.: G01F 23/26

(54) **KAPAZITIVER FÜLLSTANDSENSOR**
CAPACITIVE LEVEL SENSOR
DETECTEUR CAPACITIF DE NIVEAU

(30) Priorität: 08.05.1995 DE 19516809
(43) Veröffentlichungstag der Anmeldung: 25.02.1998
(73) Patentinhaber: Plöchinger, Heinz, Dipl.-Ing., 82319 Starnberg (DE)
(72) Erfinder: Plöchinger, Heinz, Dipl.-Ing., 82319 Starnberg (DE)
(74) Vertreter: Schoppe, Fritz, Dipl.-Ing.
(86) Internationale Anmeldenummer: EP9601929
(87) Internationale Veröffentlichungsnummer: WO9635929

(56) Entgegenhaltungen:
- WO-A-92/18856
- DE-A- 2 645 716
- DE-A- 3 902 107
- DE-C- 4 025 400

## Beschreibung

Die vorliegende Erfindung bezieht sich auf einen kapazitiven Füllstandsensor gemäß dem Oberbegriff des Patentanspruchs 1.

Aus dem Stand der Technik bekannte Füllstandsensoren weisen ein kapazitives Sensorelement auf, das innerhalb eines Fluids, dessen Füllstand zu erfassen ist, angeordnet ist. Ferner umfassen solche bekannten Füllstandsensoren Auswertungsschaltungen, mittels derer anhand der erfaßten Kapazität des kapazitiven Sensorelements ein den Füllstand angebendes Signal erzeugt wird.

Ein Nachteil dieser bekannten Füllstandsensoren besteht darin, daß die Elektroden der kapazitiven Sensorelemente geschützt sein müssen. Im Regelfall bedeutet dies, daß diese mit einem Schutzmaterial überzogen sind. Derartige Schutzüberzüge sind in vielen Fällen porös, so daß das Fluid, dessen Füllstand zu erfassen ist, mit den Elektroden des Sensorelementes, die beispielsweise aus Kupfer bestehen, in Kontakt kommen kann.

Ein solcher Kontakt ist insbesondere bei Anwendungen unerwünscht, bei denen der Füllstand eines Lebensmittelfluids, z.B. Milch in einem entsprechenden Tank, erfaßt werden soll. In diesem Fall kann eine Verunreinigung des zu erfassenden Lebensmittelfluids oder eine Änderung des Geschmacks eines solchen Lebensmittels auftreten.

Ein weiterer Nachteil dieser bekannten Füllstandsensoren besteht darin, daß deren kapazitive Sensorelemente, d. h. deren mit einem Schutzmaterial ummantelte Elektroden eine relativ aufwendige Struktur haben, die eine kostenträchtige, mehrere Schritte umfassende Herstellung erfordert.

Wiederum ein weiterer Nachteil dieser bekannten Füllstandsensoren besteht darin, daß an den Schutzüberzügen ein Teil des Fluids, dessen Füllstand zu erfassen ist, durch Adhäsion anhaftet, wodurch es zu Meßfehlern kommt und ein falscher Füllstand angezeigt wird.

Die DE 40 25 400 C1 betrifft ein Verfahren und eine Sondenanordnung für die DK-kompensierte, kapazitive Füllstandsmessung. Diese bekannte Vorrichtung umfaßt eine Füllstandsmeßsonde sowie eine Kompensationssonde, die zueinander parallel und mit ihrer Längsrichtung parallel zur Innenwand eines Behälters in ein Füllgut eintauchen. Mittels eines mit der Meßkapazität verbundenen HF-Generators und eines Meßstromgleichrichters wird die Meßkapazität der Füllstandsmeßsonde bzw. Kompensationssonde ermittelt und hieraus der Füllstand abgeleitet.

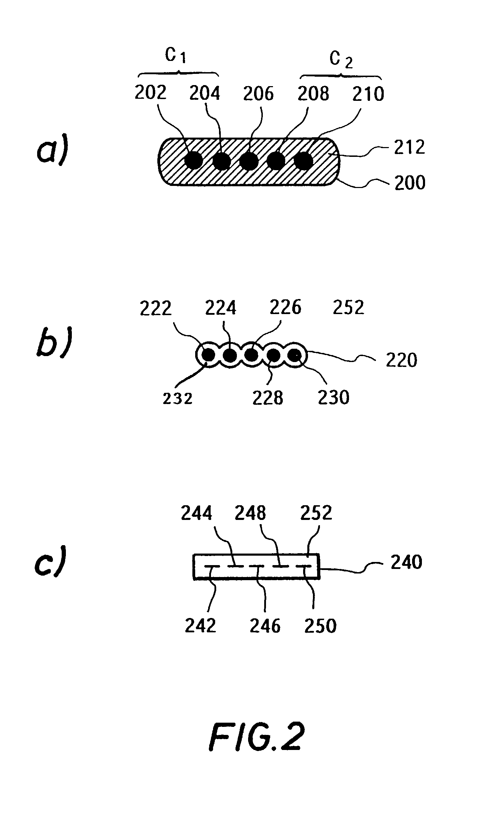

Die DE 39 02 107 A1 betrifft eine kapazitive Füllstands- und Niveaumeßeinrichtung, die einen Meßkondensator aufweist, der aus mindestens einer Meßelektrode und mindestens einer Masseelektrode besteht, die in der Form von leitfähigen Drähten, Litzen oder Bändern ausgebildet sind, die parallel nebeneinander verlaufen und gegeneinander und gegenüber dem zu messenden Medium durch eine dielektrische Isolation getrennt sind. In den Fig. 2 bis 7 sind unterschiedliche Ausführungen der Meßkondensatoren dargestellt.

Die WO 92/18856 betrifft eine Switched Capacitor Schaltung und befaßt sich mit der Messung der elektrischen Leitfähigkeit von Flüssigkeiten.

Ausgehend von diesem Stand der Technik liegt der vorliegenden Erfindung die Aufgabe zugrunde, einen Füllstandsensor derart weiterzubilden, daß dieser einfacher und kostengünstiger bei ausreichendem Schutz der Elektroden des kapazitiven Sensorelementes des Füllstandsensors hergestellt werden kann, und daß Meßfehler beim Betrieb des Füllstandsensors vermieden werden.

Diese Aufgabe wird durch einen kapazitiven Füllstandsensor gemäß Anspruch 1 gelöst.

Die vorliegende Erfindung schafft einen kapazitiven Füllstandsensor, mit einem ersten kapazitiven Sensorelement, das nahe eines Fluids, dessen Füllstand zu erfassen ist, angeordnet ist; einem zweiten kapazitiven Sensorelement, das nahe des Fluids, dessen Füllstand zu erfassen ist, angeordnet ist; und einer Auswertungseinrichtung, die mit dem ersten und dem zweiten kapazitiven Sensorelement verbunden ist und deren. Kapazitätswerte erfaßt und abhängig von den erfaßten Kapazitätswerten ein den Füllstand anzeigendes Signal erzeugt; bei dem das erste kapazitive Sensorelement und das zweite kapazitive Sensorelement jeweils durch zwei Adern eines Flachbandkabels mit mindestens fünf Adern gebildet sind, wobei die fünfte Ader zwischen den Adern verläuft, die die kapazitiven Sensorelemente bilden, und mit Masse verbunden ist; und die Auswertungseinrichtung eine Switched-Capacitor-Meßschaltung ist.

Weitere bevorzugte Weiterbildungen der vorliegenden Erfindung sind in den Unteransprüchen definiert.

Anhand der beiliegenden Zeichnung wird nachfolgend ein bevorzugtes Ausführungsbeispiel der vorliegenden Erfindung näher erläutert. Es zeigen:
- Fig. 1: ein Blockdiagramm eines bevorzugten Ausführungsbeispiels des erfindungsgemäßen Füllstandsensors;
- Fig. 2a bis 2c: Querschnittdarstellungen von Flachbandkabeln, die beim Gegenstand der vorliegenden Erfindung verwendet werden;
- Fig. 3a: ein erstes bevorzugtes Ausführungsbeispiel der vorliegenden Erfindung;
- Fig. 3b und 3c: Querschnittdarstellungen von Beispielen für die gemeinsame Anordnung von Flachbandkabel und Befestigungs- und Versteifungsschiene;
- Fig. 4a: ein zweites bevorzugtes Ausführungsbeispiel der vorliegenden Erfindung;
- Fig. 4b: eine Querschnittdarstellung des in Fig. 4a verwendeten Flachbandkabels;
- Fig. 5: eine Längssschnittdarstellung eines speziellen Flachbandkabels; und
- Fig. 6: eine Längssschnittdarstellung eines weiteren Flachbandkabels.

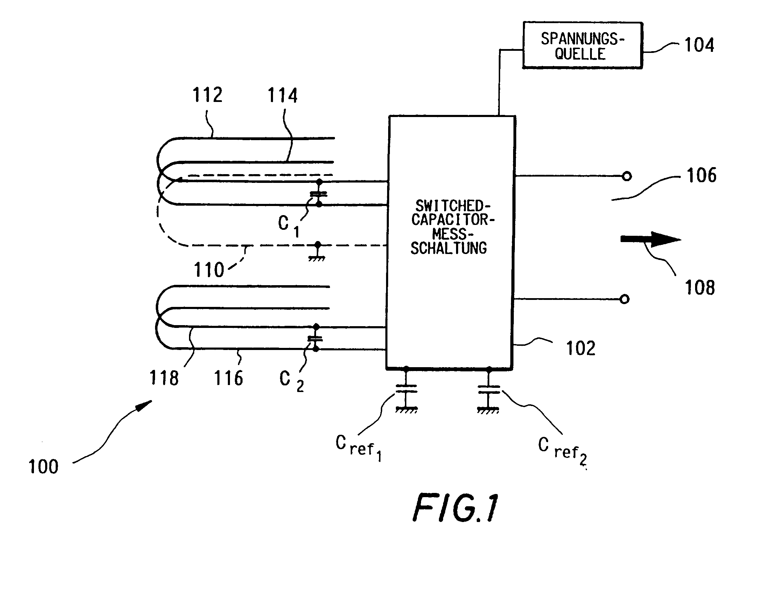

In Fig. 1 ist ein kapazitiver Füllstandsensor mit dem Bezugszeichen 100 versehen.

Bei diesem bevorzugten Ausführungsbeispiel umfaßt der Füllstandsensor 100 ein erstes kapazitives Sensorelement C₁ und ein zweites kapazitives Sensorelement C₂. Die jeweiligen Elektroden der Sensorelemente sind mit einer Auswertungseinrichtung 102, die bei diesem Ausführungsbeispiel eine Switched-Capacitor-Meßschaltung ist, verbunden. Der Füllstandsensor weist ferner eine Spannungsquelle 104 auf, die mit der Auswertungseinrichtung 102 verbunden ist und dazu dient, die jeweiligen Elektroden der Sensorelemente C₁ und C₂ abwechselnd umzupolen. Das bedeutet, daß die jeweiligen Elektroden der Sensorelmente C₁ und C₂ durch die Spannungsquelle 104 abwechselnd mit Spannungen unterschiedlicher Polarität beaufschlagt werden.

Der erfindungsgemäße Füllstandsensor umfaßt zwei Referenzkondensatoren C_{ref1} und C_{ref2}, die mit der Auswertungsschaltung 102 verbunden sind.

Es wird darauf hingewiesen, daß die jeweiligen Schaltereinrichtungen, die für die oben beschriebene unterschiedliche Beaufschlagung der Elektroden notwendig sind, sowohl in der Spannungsquelle 104 als auch in der Meßschaltung 102 vorgesehen sind. Nachdem es sich hierbei um eine an sich bekannte Konfiguration handelt, ist eine noch detailliertere Beschreibung nicht erforderlich.

Bezüglich eines Beispiels für eine Switched Capacitor Meßschaltung wird auf die Internationale Patentanmeldung WO 92/18856 verwiesen, deren Offenbarungsgehalt durch diesen Querverweis aufgenommen wird.

Die Switched Capacitor Meßschaltung 102 erzeugt an ihrem Ausgang 106 ein Ausgangssignal (Pfeil 108), das den Füllstand des Fluids anzeigt, in dem die kapazitiven Sensorelemente C₁ und C₂ angeordnet sind.

Die in Fig. 1 dargestellten Sensorelemente C₁ und C₂ sind gemäß der vorliegenden Erfindung durch ein Flachbandkabel gebildet. Solche Flachbandkabel sind in Fachkreisen an sich bekannt. In Fig. 1 ist das Flachbandkabel durch die fünf Leitungen 110, 112, 114, 116 und 118 angedeutet.

In Fig. 2a-c sind mehrere Flachbandkabel 200, 220 und 240 dargestellt, die bei dem in Fig. 1 dargestellten Ausführungsbeispiel verwendet werden können.

Das Flachbandkabel 200 in Fig. 2a umfaßt fünf Adern 202, 204, 206, 208, 210. Bei dem bevorzugten Ausführungsbeispiel der vorliegenden Erfindung ist das kapazitive Sensorelement C₁ durch die beiden parallel verlaufenden, in der Fig. 2a linksseitig außenliegenden Adern 202 und 204 gebildet, und das kapazitive Sensorelement C2 ist durch die beiden parallel verlaufenden, in der Fig. 2a rechtsseitig außenliegenden Adern 208 und 210 gebildet. Die fünf Adern 202, 204, 206, 208 und 210 sind von einem Schutzüberzug 212 umgeben.

Die Ader 206 ist mit Masse verbunden, um die beiden kapazitiven Sensorelemente C₁ und C₂ voneinander zu entkoppeln. Dies ist in Fig. 1 durch die Masseleitung 110 dargestellt.

Das in Fig. 2b dargestellte Flachbandkabel 220 entspricht im wesentlichen dem in Fig. 2a dargestellten. Das Flachbandkabel 220 umfaßt fünf Adern 222, 224, 226, 228 und 230. Die Form des Schutzüberzuges 232 ist beim Flachbandkabel 220 an die Adern 222 bis 230 angepaßt.

Das in Fig. 2c dargestellte Flachbandkabel 240 weist ebenfalls fünf Adern 242, 244, 246, 248 und 250 auf. Ein Schutzüberzug 252 umgibt die Adern 242 bis 250. Bei diesem Flachbandkabel 250 sind die Adern 242 bis 250 in dem Schutzüberzug einlaminiert.

Die bei der vorliegenden Erfindung verwendeten Flachbandkabel weisen einen Schutzüberzug auf, an dem keine Adhäsion des Fluid auftritt, dessen Füllstand zu erfassen ist, so daß bei dem Füllstandsensor gemäß der vorliegenden Erfindung keine Meßfehler auftreten.

Ein bevorzugtes Material für den Schutzüberzug ist Teflon. Es sind jedoch auch andere Materialien, bei denen keine Adhäsion des Fluids, dessen Füllstand zu erfassen ist, auftritt, als Schutzüberzug verwendbar.

Gemäß einem bevorzugten Ausführungsbeispiel der vorliegenden Erfindung kann das Flachbandkabel, das die kapazitiven Sensorelemente enthält, in der Form einer Schleife innerhalb eines Fluids angeordnet sein, so daß beide Enden des Flachbandkabels aus dem Fluid herausragen und somit eine durchgehende Isolation der kapazitiven Sensorelemente in dem Fluid sichergestellt ist.

Es ist jedoch ebenfalls möglich, das Flachbandkabel mit einem Ende in das Fluid einzubringen, vorausgesetzt, daß das entsprechende Ende, das in dem Fluid angeordnet ist, isoliert ist.

Mittels der Anordnung, wie sie in Fig. 1 gezeigt ist, ist es möglich, Umgebungseinflüsse, wie z.B. Temperaturänderungen, auf die Sensorelemente C₁, C₂ zu kompensieren. Dies erfolgt auf an sich bekannte Art und Weise durch eine Switched-Capacitor-Meßschaltung in Verbindung mit der Spannungsquelle 104, die die Sensorelemente C₁ und C₂ abwechselnd mit Spannungen unterschiedlicher Polarität beaufschlagt.

Der Vorteil des Gegenstandes der vorliegenden Erfindung besteht darin, daß durch die Verwendung eines Flachbandkabels zur Realisierung der kapazitiven Sensorelemente C₁, C₂ diese auf einfache und billige Art gebildet werden können. Naturgemäß werden bei einem Flachbandkabel gleichmäßige Abstände zwischen den einzelnen Adern sichergestellt, so daß sich bei dem Gegenstand der Erfindung die Kapazitätswerte nicht aufgrund von Ungenauigkeiten der einzelnen Elektrodenabstände verändern.

Es wird darauf hingewiesen, daß die vorliegende Erfindung nicht auf die Verwendung eines fünfadrigen Flachbandkabels beschränkt ist, sondern daß abhängig von der ausgewählten Konfiguration des erfindungsgemäßen Füllstandsensors unterschiedliche Flachbandkabel mit einer unterschiedlichen Aderanzahl verwendet werden können.

Es ist möglich, anstelle der oben beschriebenen zwei Sensorelemente auch mehr als zwei Sensorelemente zu verwenden, wobei in diesem Fall ein Flachbandkabel mit mehreren Adern verwendet werden muß und berücksichtigt werden muß, daß die einzelnen Adern, die ein einzelnes Sensorelement bilden, durch einen Masseleiter voneinander entkoppelt sind.

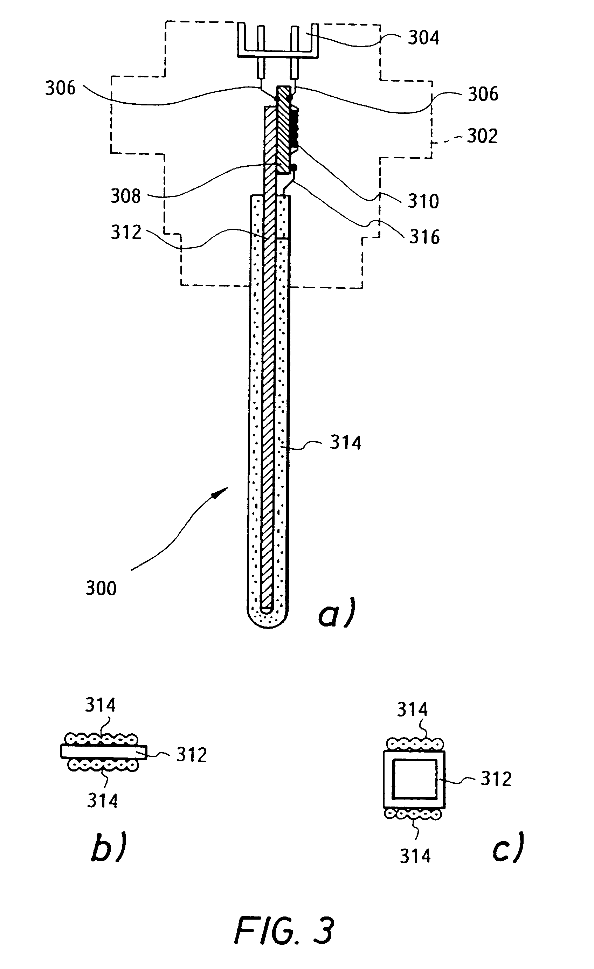

In Fig. 3a ist ein bevorzugtes Ausführungsbeispiel der vorliegenden Erfindung dargestellt. Der erfindungsgemäße Füllstandsensor ist in seiner Gesamtheit mit dem Bezugszeichen 300 bezeichnet.

Der Füllstandsensor 300 umfaßt eine Einschraubgehäuse 302. Diese Einschraubgehäuse 302 ermöglicht es, den erfindungsgemäßen Füllstandsensor 300 derart an einem Behälter, z.B. einem Tank, zu befestigen, daß eine Erfassung des Füllstands des in dem Behälter enthaltenen Fluids durchgeführt werden kann.

Eine Verbinderanordnung 304 ist vorgesehen, um die entsprechenden elektrischen und Signalführungsverbindungen mit einer externen Schaltungsanordnung, beispielsweise mit einem Anzeigegerät und einer externen Leistungsversorgung (beide nicht dargestellt), herzustellen.

Über Leitungen 306 ist die Verbinderanordnung 304 mit einer Schaltungsplatine 308, z.B. einer gedruckten Schaltungsplatine, verbunden. Auf der Schaltungsplatine 308 ist eine sogenannte ASIC-Schaltung 310 vorgesehen (ASIC = application specific integrated circuit = anwenderspezifische integrierte Schaltung), mittels der die bereits anhand von Fig. 1 beschriebene Switched Capacitor Meßschaltung ausgeführt ist.

An der Rückseite der Schaltungsplatine 308 (an der der ASIC-Schaltung 310 gegenüberliegenden Hauptoberfläche der Schaltungsplatine 308) ist eine sogenannte Befestigungs- und Versteifungsschiene 312 befestigt. Bei dem in Fig. 3a dargestellten Ausführungsbeispiel ist die Schiene 312 aus einem Kunststoff-Material hergestellt. Die Schiene 312 ist derart befestigt, daß sie sich von der Schaltungsplatine aus über das Einschraubgehäuse 302 heraus erstreckt, so daß das von der Schaltungsplatine 308 entfernte Ende der Schiene 312 in den Behälter reicht, in dem sich das Fluid befindet, dessen Füllstand zu erfassen ist.

Auf den beiden Hauptoberflächen der Schiene 312 ist ein Flachbandkabel 314 befestigt. Bei dem dargestellten Ausführungsbeispiel ist das Flachbandkabel 314 z.B. aufgeklebt. Wie es aus Fig. 3a zu erkennen ist, ist das Flachbandkabel 314 auf beiden Hauptoberflächen der Schiene 312 befestigt, so daß das Flachbandkabel 314 in der Form einer Schlaufe in dem Fluid angeordnet ist. Ein Ende des Flachbandkabels ist über eine Leitung 316 mit der ASIC-Schaltung 310 auf der Schaltungsplatine 308 verbunden. Das andere Ende des Flachbandkabels 314 ist im Leerlauf.

Diese Ausführung der Schiene 312 und des Flachbandkabels 314 ist anhand der Fig. 3b deutlicher dargestellt.

In Fig 3c ist eine alternative Ausführung der Anordnung der Schiene 312 und des Flachbandkabels 314 dargestellt.

Die Schiene 312 ist als rohrförmiges Bauteil mit quadratischem Querschnitt ausgeführt, wobei das Flachbandkabel auf zwei gegenüberliegenden Flächen der Schiene angeordnet ist.

Es ist offensichtlich, daß neben den in Fig. 3b und 3c beschriebenen Ausführungen der Anordnung der Schiene und des Flachbandkabels auch weitere Anordnungen möglich sind, und die vorliegenden Erfindung nicht auf die beschriebenen Anordnungen beschränkt ist.

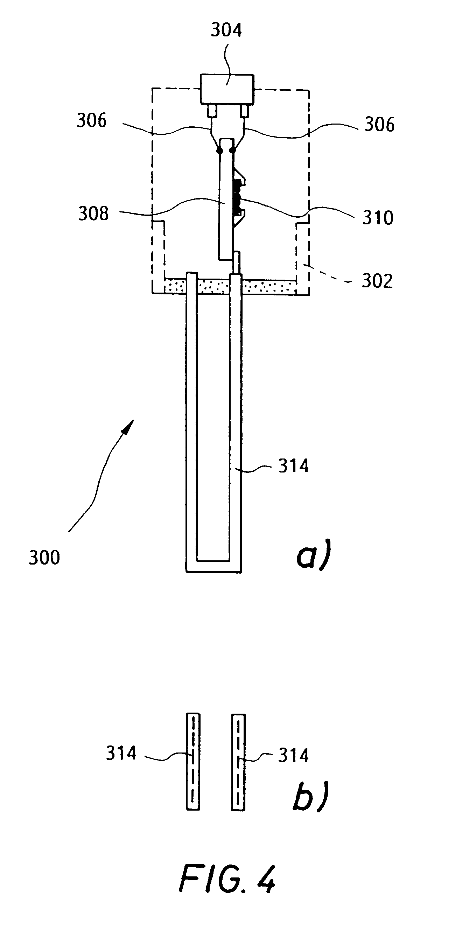

Anhand der Fig. 4a ist ein weiters Ausführungsbeispiel der vorliegenden Erfindung dargestellt. Es wird darauf hingewiesen, daß für in Fig. 3a und in Fig. 4a gleiche Bauteile die gleichen Bezugszeichen verwendet werden.

Das in Fig. 4 dargestellt Ausführungsbeispiel unterscheidet sich von dem in Fig. 3 dargestellten im wesentlichen dadurch, daß auf die Befestigungs- und Versteifungsschiene verzichtet wurde.

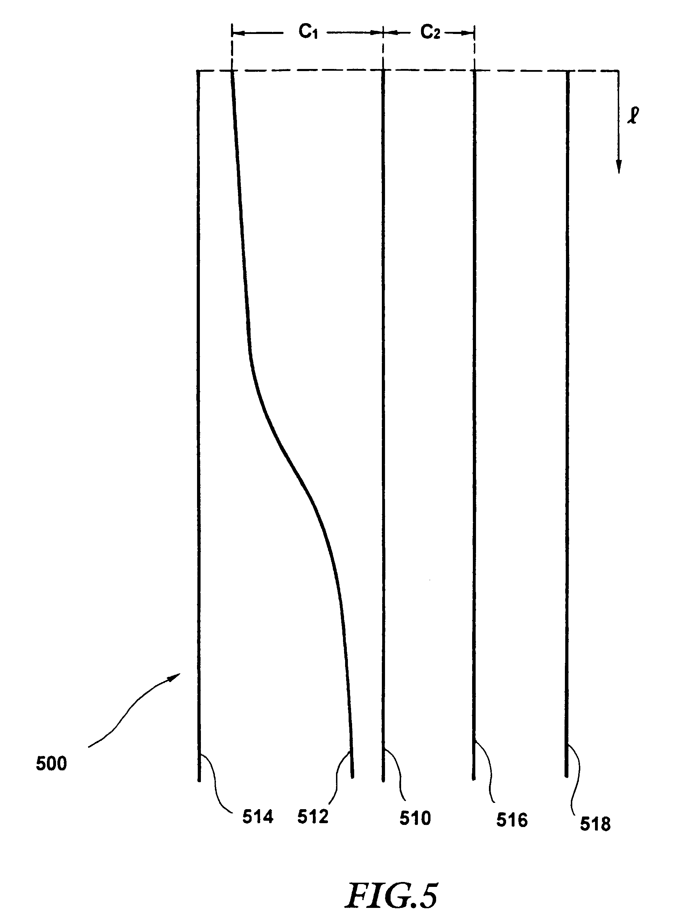

In Fig. 4b ist ein Querschnitt eines Flachbandkabels dargestellt, das bevorzugterweise bei dem in Fig 4a dargestellten Ausführungsbeispiel verwendet wird. Das in Fig 4b dargestellt Flachbandkabel entspricht dem in Fig. 2c dargestellten Flachbandkabel. Fig. 5 zeigt eine Längsschnittdarstellung durch ein fünfadriges Flachbandkabel, dessen mittlere Ader 510 und dessen beide äußeren Adern 514, 518 jeweils auf Massepotential liegen. Jeweils zwischen der Mittenader 510 und einer der beiden äußeren Adern 514, 518 liegt eine Meßader 516, 512. Die Meßader 516 hat wie bei den vorher beschriebenen Ausführungsbeispielen einen konstanten gegenseitigen Abstand zu der mittleren Ader 510 und der ihr zugeordneten äußeren Ader 518. Der Abstand zwischen der Meßader 512 und der mittleren Ader, mit der sie hier ein kapazitives Sensorelement C₁ bildet ändert sich jedoch über die Länge 1 des Flachbandkabels 500. Bei dem hier gezeigten Ausführungsbeispiel ist die Kapazitätsänderung pro Längeneinheit, die von dem zu messenden Fluid bedeckt ist, ortsabhängig. Der Verlauf des Abstandes der Meßader 512 gegenüber der mittleren Ader 510 kann derart gewählt werden, daß eine praktisch beliebige Linearisierung der Füllmengenanzeige für einen Behälter mit einem nicht-rechteckigen Querschnitt, wie beispielsweise einem Kreisquerschnitt, erreicht wird, so daß die erfaßte Kapazität der Füllmenge linear entspricht und nicht länger linear von der Füllhöhe abhängt, wie dies bei den vorhergehenden Ausführungsbeispielen der Fall ist.

Bei dem Ausführungsbeispiel der Figur 5 ändert sich der Abstand der Meßader 512, die der ersten Kapazität zugeordnet ist, gegenüber der mittleren Ader 510, während der Abstand der anderen Meßader 516 konstant ist.

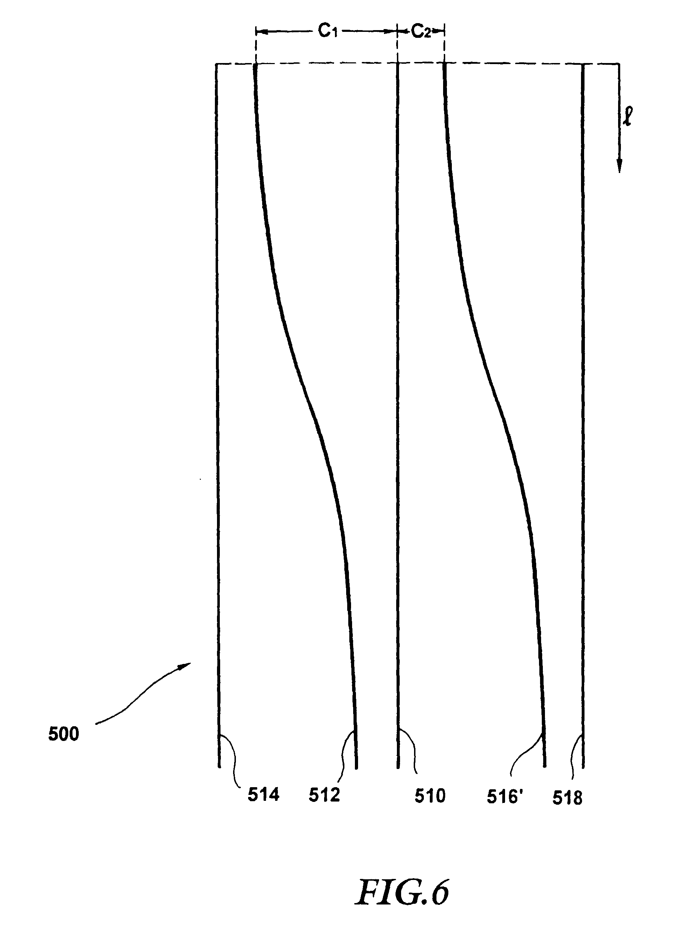

Bei dem Ausführungsbeispiel des Flachbandkabels gemäß Figur 6 ändern sich der Abstand der Meßader 512, die der ersten Kapazität zugeordnet ist, gegenüber der mittleren Ader 510, sowie der Abstand der anderen Meßader 516'gegenüber der mittleren Ader 510, die der zweiten Kapazität zugeordnet ist, sodaß sich beide Kapazitäten C₁, C₂ in Abhängigkeit von einer erfaßten inkrementalen Füllstandsänderung um eine ortsabhängige, gegenläufige Größe ändern. Allgemein haben hier beide Kapazitäten C₁, C₂ bezogen auf den Ort eine nicht-lineare Kennlinie. Die Kennlinienverläufe haben eine unterschiedliche Steilheit je nach Füllstandshöhe.

Bei den oben beschriebenen Ausführungsbeispielen des erfindungsgemäßen kapazitiven Füllstandssensors ist das Flachbandkabel jeweils mit einer Isolierung versehen und innerhalb des Behälters in dem Fluid angeordnet. Soweit der Behälter jedoch aus nicht-abschirmenden Werkstoffen, also nicht elektrisch leitfähigen Werkstoffen, wie beispielsweise Kunststoff besteht, ist es jedoch auf möglich, das Flachbandkabel an der Außenseite des Behälters anzubringen, wobei es in diesem Fall nicht zwingend erforderlich ist, die Adern des Flachbandkabels mit einer gegenseitigen Isolierung zu versehen. Jedoch wird man aus Gründen der Praktikabilität auch bei dieser Ausgestaltung des Füllstandsensors üblicherweise zumindest einen Isolierstoffstreifen auf der vom Behälter abgewandten Seite des Flachbandkabels anordnen, um eine Meßergebnisverfälschung durch unbeabsichtigte Berührung zu vermeiden.

## Patentansprüche

1. Kapazitiver Füllstandsensor, mit
einem ersten kapazitiven Sensorelement (C₁), das nahe eines Fluids, dessen Füllstand zu erfassen ist, angeordnet ist;
einem zweiten kapazitiven Sensorelement (C₂), das nahe des Fluids, dessen Füllstand zu erfassen ist, angeordnet ist; und
einer Auswertungseinrichtung (102), die mit dem ersten und dem zweiten kapazitiven Sensorelement (C₁, C₂) verbunden ist und deren Kapazitätswerte erfaßt und abhängig von den erfaßten Kapazitätswerten ein den Füllstand anzeigendes Signal (108) erzeugt;
dadurch gekennzeichnet,
daß das erste kapazitive Sensorelement (C₁) und das zweite kapazitive Sensorelement (C₂) jeweils durch zwei Adern eines Flachbandkabels (200; 220; 240) mit mindestens fünf Adern gebildet sind, wobei die fünfte Ader (206; 226; 246) zwischen den Adern (202, 204, 208, 210; 222, 224, 228, 230; 242, 244, 248, 250) verläuft, die die kapazitiven Sensorelemente (C₁, C₂) bilden, und mit Masse verbunden ist; und
daß die Auswertungseinrichtung (102) eine Switched-Capacitor-Meßschaltung ist.

2. Kapazitiver Füllstandsensor nach Anspruch 1, dadurch gekennzeichnet,
daß die Auswertungseinrichtung (102) derart aufgebaut ist, daß Umgebungseinflüsse auf die kapazitiven Sensorelemente (C₁, C₂) das erzeugte Signal (108) nicht beeinflussen.

3. Kapazitiver Füllstandsensor nach Anspruch 1 oder 2, dadurch gekennzeichnet,
daß das Flachbandkabel (200) eine Schlaufe in dem Fluid bildet.

4. Kapazitiver Füllstandsensor nach einem der Ansprüche 1 bis 3, dadurch gekennzeichnet,
daß das Flachbandkabel (200) aus einem das Fluid abweisenden Material hergestellt ist.

5. Kapazitiver Füllstandsensor nach Anspruch 4, dadurch gekennzeichnet,
daß das Material Teflon ist.

6. Kapazitiver Füllstandsensor nach einem der Ansprüche 1 bis 5, dadurch gekennzeichnet, daß
die Auswertungseinrichtung (102) durch eine anwendungsspezifische integrierte Schaltung (310) gebildet ist, die auf einer Schaltungsplatine (308) angeordnet ist;
die Schaltungsplatine (308) in einem Einschraubgehäuse (302) angeordnet ist;
das Einschraubgehäuse (302) eine Verbinderanordnung (304) zum Herstellen der entsprechenden elektrischen und Signalführungsverbindungen mit einer externen Schaltungsanordnung aufweist, wobei die Verbinderanordnung mit der integrierten Schaltung (310) verbunden ist; und
das Flachbandkabel (314) mit der integrierten Schaltung (310) verbunden ist und sich von dieser über das Einschraubgehäuse (302) hinaus erstreckt.

7. Kapazitiver Füllstandsensor nach Anspruch 6, dadurch gekennzeichnet,
daß das Flachbandkabel (314) auf einer Schiene (312) befestigt ist, wobei die Schiene (312) an der der integrierten Schaltung (310) abgewandten Hauptoberfläche der Schaltungsplatine (308) befestigt ist.

8. Kapazitiver Füllstandsensor nach Anspruch 7, dadurch gekennzeichnet,
daß die Schiene (312) ein rohrförmiges Bauteil mit einem quadratischen Querschnitt ist, wobei das Flachbandkabel (314) auf zwei gegenüberliegenden Oberflächen angeordnet ist.

9. Kapazitiver Füllstandsensor nach einem der Ansprüche 1 bis 8, dadurch gekennzeichnet,
daß zumindest zwei Adern (510, 512) des Flachbandkabels (500), welche miteinander das erste oder das zweite kapazitive Sensorelement (C₁, C₂) bilden, einen sich über die Länge des Flachbandkabels ändernden gegenseitigen Abstand aufweisen.

10. Kapazitiver Füllstandsensor, nach einem der Ansprüche 1 bis 9, dadurch gekennzeichnet,
daß der gegenseitige Abstand der Andern (510, 512) in Abhängigkeit von der Querschnittsgestalt des Behälters, in dem der Füllstand ermittelt wird, derart gewählt ist, daß die durch das betreffende kapazitive Sensorelement gebildete Kapazität proportional zu der Füllmenge des Behälters ist.

11. Kapazitiver Füllstandsensor nach einem der Ansprüche 1 bis 10, dadurch gekennzeichnet,
daß das Flachbandkabel an der Außenseite eines nicht elektrisch leitfähigen Behälters angeordnet ist.

## Claims

1. A capacitive filling level sensor comprising
a first capacitive sensor element (C₁) arranged close to a fluid whose filling level is to be detected;
a second capacitive sensor element (C₂) arranged close to a fluid whose filling level is to be detected; and
an evaluation means (102) which is connected to said first and second capacitive sensor elements (C₁, C₂) and which detects the capacitance values thereof, said evaluation means (102) producing in response to the detected capacitance values a signal (108) indicative of the filling level;
characterized in
that said first capacitive sensor element (C₁) and said second capacitive sensor element (C₂) are each defined by two wires of a ribbon cable (200; 220; 240) comprising at least five wires, the fifth wire (206; 226; 246) extending between the wires (202, 204, 208, 210; 222, 224, 228, 230; 242, 244, 248, 250) which define the capacitive sensor elements (C₁, C₂), and being connected to ground; and
that the evaluation means (102) is a switched-capacitor measuring circuit.

2. A capacitive filling level sensor according to claim 1, characterized in
that the evaluation means (102) has a structural design of such a nature that environmental influences acting on the capacitive sensor elements (C₁, C₂) will not influence the signal (108) produced.

3. A capacitive filling level sensor according to claim 1 or 2, characterized in
that the ribbon cable (200) defines a loop in the fluid.

4. A capacitive filling level sensor according to one of the claims 1 to 3, characterized in
that the ribbon cable (200) is produced from a material repelling the fluid.

5. A capacitive filling level sensor according to claim 4, characterized in
that this material is Teflon.

6. A capacitive filling level sensor according to one of the claims 1 to 5, characterized in that
the evaluation means (102) is defined by an application-specific integrated circuit (310) which is arranged on a circuit board (308);
the circuit board (308) is arranged in a screw-in housing (302);
the screw-in housing (302) is provided with a connector arrangement (304) for establishing the respective electrical and signal-carrying connections to an external circuit arrangement, said connector arrangement being connected to the integrated circuit (310); and
that the ribbon cable (314) is connected to the integrated circuit (310) and extends from said integrated circuit beyond the screw-in housing (302).

7. A capacitive filling level sensor according to claim 6, characterized in
that the ribbon cable (314) is secured to a rail (312), said rail (312) being secured to the main surface of the circuit board (308) facing away from the integrated circuit (310).

8. A capacitive filling level sensor according to claim 7, characterized in
that the rail (312) is a tubular component having a square cross-section, the ribbon cable (314) being arranged on two opposing surfaces.

9. A capacitive filling level sensor according to one of the claims 1 to 8, characterized in
that at least two wires (510, 512) of the ribbon cable (500), which define together the first or the second capacitive sensor element (C₁, C₂), extend at a distance from one another that varies along the length of the ribbon cable.

10. A capacitive filling level sensor according to one of the claims 1 to 9, characterized in
that, depending on the cross-sectional shape of the receptacle in which the filling level is determined, the mutual distance of the wires (510, 512) is chosen such that the capacitance formed by the respective capacitive sensor element is proportional to the filling amount contained in the receptacle.

11. A capacitive filling level sensor according to one of the claims 1 to 10, characterized in
that the ribbon cable is arranged on the outer surface of a non-conductive receptacle.

## Revendications

1. Capteur capacitif de niveau comprenant:
un premier élément capteur capacitif (C₁) qui est agencé près d'un fluide dont le niveau doit être détecté;
un deuxième élément capteur capacitif (C₂) qui est agencé près du fluide dont le niveau doit être détecté; et
un appareillage d'évaluation (102) qui est relié au premier et au deuxième éléments capteurs capacitifs (C₁, C₂) et détecte leurs valeurs de capacité et qui engendre, en fonction des valeurs détectées de capacité un signal indicatif (108) du niveau;
caractérisé en ce que
le premier élément capteur capacitif (C₁) et le deuxième élément capteur capacitif (C₂) sont constitués chacun de deux conducteurs d'un câble plat (200; 201; 240) qui comporte au moins cinq conducteurs, le cinquième conducteur (206; 226; 246) étant situé entre les conducteurs (202, 204, 208, 210; 222, 224, 228, 230; 242, 244, 248, 250), qui constituent les éléments capteurs capacitifs (C₁, C₂) et étant relié à la masse, et en ce que
l'appareillage d'évaluation (102) est un circuit de mesure dit à "Switched capacitor" selon le terme anglo-saxon, c'est-à-dire à condensateur commuté.

2. Capteur capacitif de niveau selon la revendication 1, caractérisé en ce que
l'appareillage d'évaluation (102) est constitué d'une manière telle que les influences de l'environnement sur les éléments capteurs capacitifs (C₁, C₂) n'influencent pas le signal engendré (108).

3. Capteur capacitif de niveau selon la revendication 1 ou 2, caractérisé en ce que
le câble plat (200) forme une boucle dans le fluide.

4. Capteur capacitif de niveau selon l'une des revendications 1 à 3, caractérisé en ce que
le câble plat (200) est en une matière non mouillable par le fluide.

5. Un capteur capacitif de niveau selon la revendication 4, caractérisé en ce que
la matière est du téflon.

6. Capteur capacitif de niveau selon l'une des revendications 1 à 5, caractérisé en ce que
l'appareil d'évaluation (102) est formé d'un circuit intégré (310) spécifique à l'application, qui est agencé sur une platine (308) de circuit;
la platine (308) de circuit est agencée dans un boîtier (302) à visser;
le boîtier (302) à visser comporte un agencement (304) de connecteurs pour réaliser les connexions électriques et les connexions d'amenée de signaux correspondantes avec un agencement de circuit externe, l'agencement de connecteurs étant relié au circuit intégré (310); et
le câble plat (314) est relié au circuit intégré (310) et s'étend à partir de celui-ci jusqu'à l'extérieur du boîtier (302) à visser.

7. Capteur capacitif de niveau selon la revendication 6, caractérisé en ce que
le câble plat (314) est fixé sur un rail (312), le rail (312) étant fixé sur la surface principale de la platine (308) de circuit qui est opposée au circuit intégré (310).

8. Capteur capacitif de niveau selon la revendication 7, caractérisé en ce que
le rail (312) est un composant tubulaire à section transversale carrée, le câble plat (314) étant agencé sur deux surfaces opposées.

9. Capteur capacitif de niveau selon l'une des revendications 1 à 8, caractérisé en ce que
au moins deux conducteurs (510, 512) du câble plat (500), qui forment l'un avec l'autre le premier ou le deuxième élément capteur capacitif (C₁, C₂) présentent une distance réciproque qui varie sur la longueur du câble plat.

10. Capteur capacitif de niveau selon l'une des revendications 1 à 9, caractérisé en ce que
la distance réciproque des conducteurs (510, 512) est choisie en fonction de la configuration de la section transversale du récipient dans lequel le niveau est déterminé, d'une manière telle que la capacité formée par l'élément capacitif concerné est proportionnelle au volume de remplissage du récipient.

11. Capteur capacitif de niveau selon l'une des revendications 1 à 10, caractérisé en ce que
le câble plat est agencé sur le côté extérieur d'un récipient qui n'est pas électriquement conducteur.
